(19) Europäisches Patentamt
European Patent Office
Office européen des brevets

(11) **EP 1 900 604 B1**

(12) **EUROPEAN PATENT SPECIFICATION**

(45) Date of publication and mention
of the grant of the patent:
**15.12.2010 Bulletin 2010/50**

(51) Int Cl.:
***B62D 5/04*** *(2006.01)*      ***B62D 5/065*** *(2006.01)*

(21) Application number: **07022073.6**

(22) Date of filing: **13.08.1997**

(54) **Power steering system**

Servolenksystem

Système de direction assistée

(84) Designated Contracting States:
**DE ES FR GB IT**

(43) Date of publication of application:
**19.03.2008 Bulletin 2008/12**

(62) Document number(s) of the earlier application(s) in
accordance with Art. 76 EPC:
**97935785.2 / 0 930 215**

(73) Proprietor: **JTEKT Corporation**
**Osaka-shi**
**Osaka 542-8502 (JP)**

(72) Inventors:
• **Kaji, Hiroaki**
**c/o JTEKT Corporation**
**Chuo-ku, Osaka-shi**
**Osaka 542-8502 (JP)**
• **Sakamaki, Masahiko**
**Yao-shi**
**Osaka 581-0023 (JP)**

(74) Representative: **Steil, Christian et al**
**Witte, Weller & Partner**
**Postfach 10 54 62**
**70047 Stuttgart (DE)**

(56) References cited:
**EP-A- 0 044 733      EP-A- 0 791 523**
**JP-A- 9 058 495**

## Description

The present invention relates to a power steering apparatus which applies a steering assist force to a steering mechanism by a hydraulic pressure generated by a pump driven by an electric motor.

Power Steering apparatuses are known which assist operation of a steering wheel by supplying a working oil from an oil pump to a power cylinder coupled to a steering mechanism. The.oil pump is driven by an electric motor, and a steering assist force is generated by the power cylinder in accordance with the rpm of the electric motor.

Drive control of the electric motor is performed, for example, on the basis of the steering angle of the steering wheel. That is, the steering angle is determined on the basis of an output of a steering angle sensor provided in association with the steering wheel, and the driving of the electric motor is controlled on the basis of the steering angle. More specifically, if the steering angle of the steering wheel is within a motor stop range defined around a steering angle midpoint, steering assist is considered to be unnecessary, so that the electric motor is stopped. On the other hand, if the steering angle of the steering wheel is out of the motor stop range, the electric motor is driven to generate a steering assist force.

Detection of the steering angle midpoint is achieved, for example, by sampling steering angle data outputted from the steering angle sensor and regarding the most frequent steering angle data as corresponding to the steering angle midpoint.

However, the power steering apparatus described above performs the drive control of the electric motor with the use of the steering angle sensor, so that the drive control cannot be performed on the basis of the steering torque. Therefore, the steering feeling is not satisfactory.

Where a motor vehicle travels along a straight road inclined transversely of the vehicle, for example, a torque should be applied to the steering wheel for stabilization of the vehicle even though the steering angle of the steering wheel is small enough to be within the motor stop range. In such a case, the aforesaid power steering apparatus does not provide the steering assist even under application of the steering torque. Hence, the steering feeling is deteriorated.

A torque sensor may be used instead of the steering angle sensor to perform the drive control in accordance with the steering torque. However, the use of the torque sensor is not preferable, because the torque sensor is less reliable than the steering angle sensor.

From EP 0 044 733 A1 a vehicle hydraulic power steering system is known, wherein the operation of a pump for supplying a pressurized working fluid to a power steering unit is controlled in accordance with an output signal of a control means which is responsive to detected values of a speed of the rotation of a steering wheel and a pressure of the working fluid supplied to said power steering unit. The operation of the motor driving the pump is initiated when the steering wheel is turned at a speed of the rotation higher than a predetermined value and it is ceased when the pressure of the working fluid is reduced below a predetermined value due to the termination of a power assist operation of the power steering system.

From JP 09 058 495 A a power steering device is known wherein based on the loading of a hydraulic pump driven by an electric motor steering is supplemented by hydraulic pressure developed by the hydraulic pump by controlling the rotation speed of the electric motor by switching it between high and low in rotation. The device is equipped with a means detecting current of the electric motor and a threshold setting means setting the threshold value of motor current required to make switchover between high and low in rotation speed for the electric motor based on motor current outputted by the means.

It is an object of the present invention to provide a power steering apparatus which can ensure an improved steering feeling.

It is another object of the present invention to provide a power steering apparatus which is capable of controlling driving of an electric motor in accordance with a steering torque to properly provide steering assist without the need for a torque sensor.

It is further another object of the present invention to provide a power steering apparatus which can ensure enhancement of energy saving.

The above objects are achieved by a power steering apparatus according to claim 1.

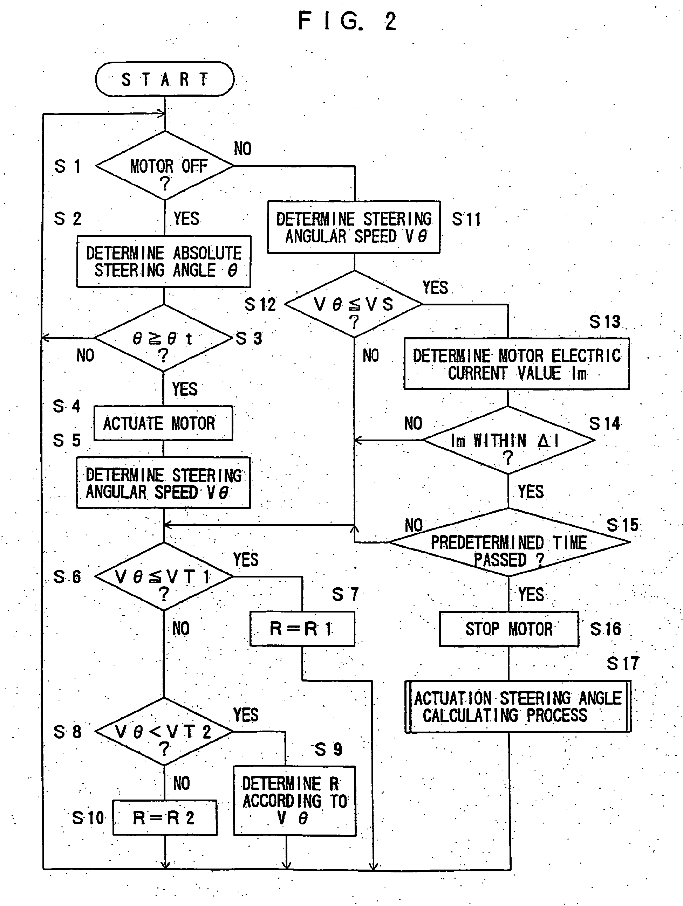

A power steering apparatus of the present invention, which is adapted to generate a steering assist force by a hydraulic pressure generated by a pump driven by an electric motor, comprises: steering angular speed detecting means (steering angle sensor 11, CPU 31, and Step S11 in Fig. 2) for detecting a steering angular speed; electric current detecting means (electric current detecting circuit 12) four detecting the value of motor current flowing through the electric motor; and stop controlling means (CPU 31 and Steps S12 to S16 in Fig. 2) for stopping the electric motor in response to duration of a predetermined time period during which the steering angular speed detected by the steering angular speed detecting means is kept not greater than a predetermined stop threshold and the motor electric current value detected by the electric current detecting means is kept within a predetermined motor stop range.

The motor current value of the electric motor varies depending upon a load applied to the motor, i.e., a steering torque. Therefore, when a relatively large steering torque is applied to a steering mechanism, the electric current value of the electric motor is relatively high even if the steering angle has a value close to a steering angle midpoint. In such a case, the electric motor is not stopped in accordance with the present invention. Since the electric motor can be kept driven when a steering torque is applied, the driving of the electric motor can be controlled according to the steering torque, even without the torque sensor. Thus, the steering feeling is improved.

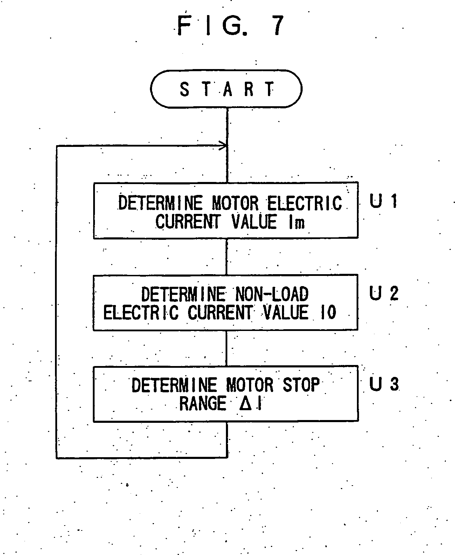

According to the present invention, the power steering apparatus further comprises: non-load electric current value calculating means (CPU 31 and Steps U1, U2 in Fig. 7) for determining, on the basis of the motor electric current value detected by the electric current detecting means, a non-load electric current value which corresponds to a motor electric current value observed when the electric motor is in a non-load state; and motor stop range determining means (CPU 31 and Step U3 in Fig. 7) for determining the motor stop range on the basis of the non-load electric current value determined by the non-load electric current value calculating means.

When the steering torque is zero, the electric motor is in the non-load state. Therefore, it is considered that, when the motor electric current value is within a predetermined range around the non-load electric current value, the steering torque is virtually zero, so that no steering assist is required. By determining the motor stop range on the basis of the non-load electric current value, stop control of the motor can properly be performed.

The motor stop range determining means is adapted to determine as the motor stop range a range defined between the non-load electric current value and a value obtained by adding a predetermined electric current threshold to the non-load electric current value.

The electric current threshold is preferably determined on the basis of a torque range where a motor vehicle equipped with the power steering apparatus requires no steering assist.

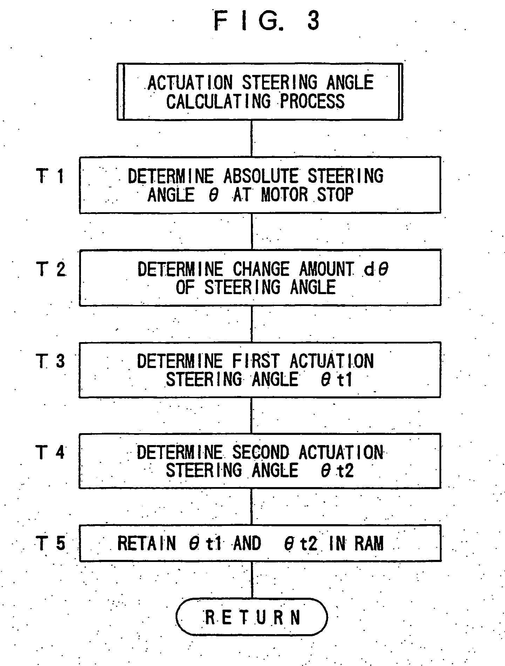

Another power steering apparatus of the present invention, which is adapted to generate a steering assist force by a hydraulic pressure generated by a pump driven by an electric motor, comprises: steering angle detecting means (steering angle sensor 11, CPU 31, and Step S2 in Fig. 2) for detecting a steering angle with respect to a steering angle midpoint; actuation control means (CPU 31 and Steps S3, S4 in Fig. 2) for actuating the electric motor on condition that a change amount of the steering angle detected by the steering angle detecting means exceeds a predetermined actuation threshold in a motor stop state; and actuation threshold determining means (CPU 31 and Step T2 in Fig. 3) for determining the actuation threshold in accordance with a value of the steering angle detected by the steering angle detecting means when the electric motor is stopped.

Where the steering angle has a value close to the steering angle midpoint, the steering angle changes by a relatively large change amount to get out of a play angle range of the steering wheel. That is, a large amount of the change in the steering angle is required until the steering assist becomes necessary. On the contrary, where the steering angle is relatively large, a great steering assist force is required immediately after the steering operation is started.

In the present invention, the actuation threshold is determined in accordance with the steering angle detected when the electric motor is stopped, and the electric motor is actuated on condition that the change amount of the steering angle exceeds the actuation threshold. Therefore, the actuation threshold can be set greater when the steering angle at the stop of the motor is close to the steering angle midpoint, and set smaller when the steering angle (absolute value thereof) at the motor stop is relatively large. Thus, the electric motor is not actuated needlessly when the steering angle is close to the steering angle midpoint, and a great steering assist force can immediately be generated when the steering angle is large. Therefore, the enhancement of the energy saving and the improvement of the steering feeling can both be achieved.

The actuation control means may include actuation steering angle calculating means (CPU 31 and Step T3 in Fig. 3) for determining, on the basis of the value of the steering angle detected by the steering angle detecting means and the actuation threshold determined by the actuation threshold determining means, an actuation steering angle which corresponds to a steering angle at which the electric motor in an off state is to be actuated;, and means (CPU 31 and Steps S3, S4 in Fig. 2) for actuating the electric motor, when the electric motor is off, on condition that the value of the steering angle detected by the steering angle detecting means reaches the actuation steering angle determined by the actuation steering angle calculating means.

Further, the actuation threshold determining means is preferably adapted to set the actuation threshold smaller as the value of the steering angle detected by the steering angle: detecting means at the motor stop increases.

In accordance with another embodiment of the present invention, the power steering apparatus further comprises vehicle speed detecting means (vehicle speed sensor 13) for detecting a vehicle speed, and the actuation threshold determining means is adapted to set the actuation threshold greater as the vehicle speed detected by the vehicle speed detecting means increases.

Thus, immediate motor actuation is ensured at low speed traveling, and motor actuation sensitivity is reduced at high speed traveling. Therefore, needless actuation of the electric motor is prevented at the high speed traveling at which the steering assist is less necessary, while the steering assist is immediately started at the low speed traveling. This enhances the energy saving as well as the steering feeling.

The foregoing and other objects, features and effects of the present invention will become more apparent from the following description of the embodiment with reference to the attached drawings.

Fig. 1 is a conceptual diagram illustrating a basic construction of a power steering apparatus according to one embodiment of the present invention;
Fig. 2 is a flow chart for explaining drive control of a motor;
Fig. 3 is a flow chart illustrating an actuation steering angle calculating process for determining an actuation steering angle;
Figs. 4A and 4B are diagrams for explaining exemplary setting of first and second constants;
Fig. 5 is a diagram showing a relationship between the steering angle and the actuation steering angle;
Fig. 6 is a diagram for explaining a relationship between the motor actuation sensitivity and the vehicle speed;
Fig. 7 is a flow chart for explaining a motor stop range determining process; and
Fig. 8 is a graph showing a relationship between the motor electric current value and the steering torque.

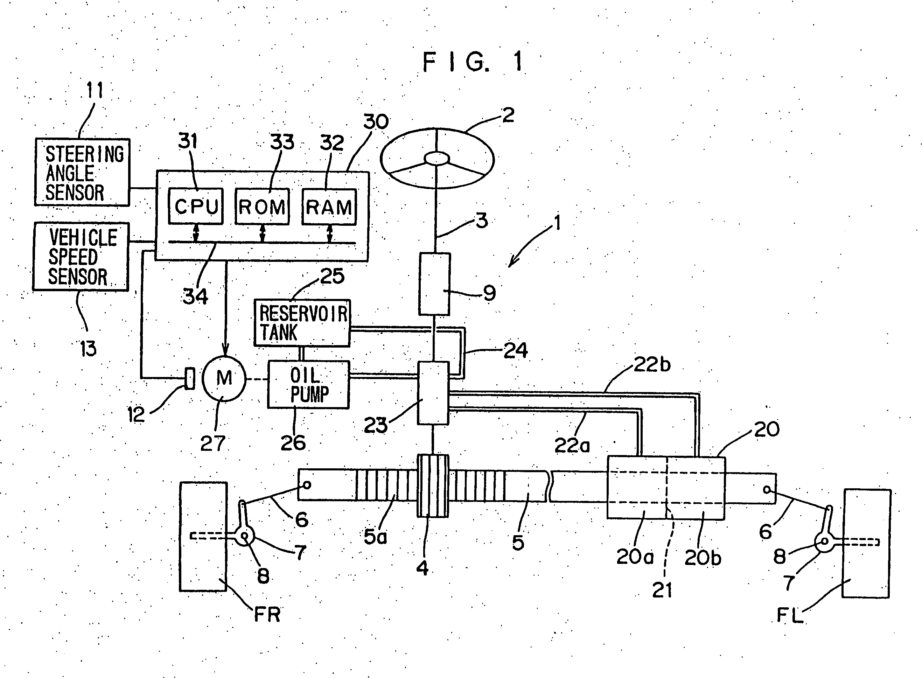

Fig. 1 is a conceptual diagram illustrating a basic construction of a power steering apparatus according to one embodiment of the present invention. This power steering apparatus is provided in association with a steering mechanism 1 of a motor vehicle for applying a steering assist force to the steering mechanism 1.

The steering mechanism 1 includes a steering wheel 2 to be operated by a driver, a steering shaft 3 coupled to the steering wheel 2, a pinion gear 4 provided at a distal end of the steering shaft 3, and a rack shaft 5 having a rack gear 5a meshed with the pinion gear 4 and extending transversely of the motor vehicle. Tie rods 6 are connected to opposite ends of the rack shaft 5, and further connected to knuckle arms 7 which respectively support left and right front wheels FL and FR as steerable wheels. The knuckle arms 7 are respectively provided rotatably about king pins 8.

With this arrangement, when the steering wheel 2 is operated to rotate the steering shaft 3, the rotational motion is converted into a linear motion transverse to the motor vehicle by the pinion gear 4 and the rack shaft 5. The linear motion is converted into rotational motions of the knuckle arms 7 about the king pins 8, thereby achieving the steering of the left and right front wheels FL, FR

A torsion bar 9 which is adapted to be twisted in accordance with the direction and magnitude of a steering torque applied to the steering wheel 2 and a hydraulic pressure control valve 23 which is adapted to change its valve aperture in accordance with the direction and magnitude of the torsion of the torsion bar 9 are incorporated in the steering shaft 3. The hydraulic pressure control valve 23 is connected to a power cylinder 20 for applying a steering assist force to the steering mechanism 1. The power cylinder 20 includes a piston 21 provided integrally with the rack shaft 5, and a pair of cylinder chambers 20a and 20b split by the piston 21. The cylinder chambers 20a and 20b are connected to the hydraulic pressure control valve 23 via oil supply/return lines 22a and 22b, respectively.

The hydraulic pressure control valve 23 is disposed in an oil circulation line 24 which extends through a reservoir tank 25 and an oil pump 26. The oil pump 26 is driven by an electric motor 27, so that a working oil contained in the reservoir tank 25 is pumped up and supplied to the hydraulic pressure control valve 23. An excess of the working oil is returned to the reservoir tank 25 from the hydraulic pressure control valve 23 via the oil circulation line 24.

When a torsion is exerted on the torsion bar 9 in one direction, the hydraulic pressure control valve 23 supplies the working oil to one of the cylinder chambers 20a, 20b of the power cylinder 20 via one of the oil supply/return lines 22a, 22b.. When a torsion is exerted on the torsion bar 9 in the other direction, the hydraulic pressure control valve supplies the working oil to the other of the cylinder chambers 20a, 20b via the other of the oil supply/return lines 22a, 22b. When virtually no torsion is exerted on the torsion bar 9, the hydraulic pressure control valve 23 is in a so-called equilibrium state, so that the working oil is not supplied to the power cylinder 20 but circulated in the oil circulation line 24.

When the working oil is supplied to either one of the cylinder chambers of the power cylinder 20, the piston 21 moves transversely of the motor vehicle. Thus, a steering assist force acts on the rack shaft 5.

An exemplary construction of the hydraulic pressure control valve is disclosed in detail, for example, in Japanese Unexamined Patent Publication No. 59-118577 (1984), the disclosure of which is incorporated herein by reference.

The driving of the motor 27 is controlled by an electronic control unit 30. The electronic control unit 30 is comprised of a microprocessor which includes a CPU 31, a RAM 32 which provides a work area for the CPU 31, a ROM 33 storing therein operation programs for the CPU 31, and buses 34 interconnecting the CPU 31, the RAM 32 and the ROM 33.

The electronic control unit 30 receives steering angle data outputted from a steering angle sensor 11. The steering angle sensor 11 is provided in association with the steering wheel 2. The steering angle sensor 2 sets at an initial value "0" a steering angle of the steering wheel 2 observed when an ignition key switch is actuated for startup of an engine, and outputs steering angle data which has a value corresponding to a steering angle relative to the initial value and a sign corresponding to a steering direction.

The electronic control unit 30 also receives electric current data applied from an electric current detecting circuit 12 which detects electric current flowing through the motor 27. The electric current data has a value proportional to the value of a consumed electric current of the motor 27 (motor electric current).

Further, the electronic control unit 30 receives vehicle speed data outputted from a vehicle speed sensor 13. The vehicle speed sensor 13 may be adapted to directly detect a vehicle speed or, alternatively, adapted to calculate the vehicle speed on the basis of an output pulse of a wheel speed sensor provided in association with the wheels.

The electronic control unit 30 controls the driving of the motor 27 on the basis of the steering angle data, the electric current data and the vehicle speed data outputted from the steering angle sensor 11, the electric current detecting circuit 12 and the vehicle speed sensor 13, respectively.

Fig. 2 is a flow chart for explaining the drive control of the motor 27. The CPU 31 first judges whether or not the motor 27 is off (Step S1). For this judgment, a flag may be employed, for example., which is to be set when the motor 27 is actuated and reset when the motor 27 is stopped.

If the motor 27 is in an off state (YES in Step S1), the CPU 31 calculates an absolute steering angle θ with respect to a steering angle midpoint θQ on the basis of the steering angle data outputted from the steering angle sensor 11 (Step S2).

The steering angle midpoint θ0 is a steering angle of the steering wheel 2 observed when the motor vehicle travels straight. The CPU 31, for example, samples steering angle data outputted from the steering angle sensor 11 after the ignition key switch is actuated, and prepares a histogram of values of the steering angle data. After a predetermined number of data are sampled, the CPU 31 determines the most frequent steering angle data, which is regarded as steering angle data corresponding to the steering angle midpoint θ0. The steering angle data of the steering angle midpoint θ0 thus determined is stored in the RAM 32. In Step S2, the CPU 31 determines the absolute steering angle θ on the basis of the steering angle data from the steering angle sensor 11 and the steering angle data of the steering angle midpoint θ0 retained in the RAM 32.

The CPU 31 further judges whether or not the absolute steering angle θ thus determined is equal to or greater than an actuation steering angle θt stored in the RAM 32 (Step S3). The actuation steering angle θt corresponds to an absolute steering angle of the steering wheel 2 at which the motor 27 is to be actuated. The actuation steering angle θt has been determined, through an actuation steering angle calculating process which will be described later, depending on the absolute steering angle observed at precedent stop of the motor 27, and stored in the RAM 32.

The absolute steering angle 6 and the actuation steering angle θt are each provided, for example, with a positive sign if the angle is formed on the right of the steering angle midpoint θ0 or with a negative sign if the angle is formed on the left of the steering angle midpoint θ0. Strictly speaking, the judgment in Step S3 should be performed through comparison of the absolute values of the absolute steering angle θ and the actuation steering angle θt. For simplification of explanation, it is herein assumed that the absolute steering angle θ and the actuation steering angle θt each have a positive value.

If it is judged that the absolute steering angle θ does not reach the actuation steering angle θt (NO in Step S3), the program returns to Step S1. On the other hand, if the absolute steering angle θ reaches the actuation steering angle θt (YES in Step S3), the CPU 31 actuates the motor 27 (Step S4).

The rpm of the motor 27 is determined in accordance with a steering angular speed Vθ of the steering wheel 2. More specifically, the CPU 31 determines, on the basis of the steering angle data outputted from the steering angle sensor 11, the steering angular speed Vθ which is a time-related change rate of the steering angle (Step S5). The CPU next judges whether or not the steering angular speed Vθ thus determined is equal to or smaller than a predetermined first threshold VT1 (VT1=10 (degree/sec)) (Step S6). If the steering angular speed Vθ is not greater than the first threshold VT1 (YES in Step S6), the motor 27 is driven so that the motor rpm R is equated to a predetermined first rpm R1 (e.g., R1=1800 (rpm)) (Step S7). That is, if the steering angular speed Vθ is not greater than the first threshold VT1, the motor 27 is driven constantly at the first rpm R1 irrespective of the value of the steering angular speed Vθ.

If the steering angular speed Vθ is greater than the first threshold VT1 (NO in Step S6), the CPU 31 judges whether or not the steering angular speed Vθ is smaller than a second threshold VT2 (e.g., VT2=600 (degree/sec)) which is greater than the first threshold VT1 (Step S8). If the steering angular speed Vθ is smaller than the second threshold VT2 (YES in Step S8), the CPU 31 drives the motor 27 at a motor rpm R according to the steering angular speed Vθ (Step S9). More specifically, if the steering angular speed V6 is within a range which is greater than the first threshold VT1 and smaller than the second threshold VT2, the CPU 31 determines the motor rpm R so that the motor rpm R varies generally linearly with the steering angular speed Vθ between the first rpm R1 and a second rpm R2 (R2 > R1).

If the steering angular speed Vθ is not smaller than the second threshold VT2 (NO in Step S8), the CPU 31 drives the motor 27 so that the motor rpm R is equated to the predetermined second rpm R2 (e.g., R2=6000 (rpm)) (Step S10). That is, if the steering angular speed Vθ is not smaller than the second threshold VT2, the motor 27 is driven constantly at the second rpm R2 irrespective of the steering angular speed Vθ.

If it is judged in Step S1 that the motor 27 is driven, the CPU 31 determines the steering angular speed Vθ on the basis of the steering angle data outputted from the steering angle sensor 11 (Step S11), and judges whether or not the steering angular speed Vθ thus determined is equal to or smaller than a predetermined stop threshold VS (e.g., VS=10 (degree/sec)) (Step S12). If the steering angular speed Vθ is greater than the stop threshold VS (NO in Step S12), the program goes to Step S6, and the CPU 31 determines the motor rpm R on the basis of the value of the steering angular speed Vθ, and drives the motor 27 at the motor rpm R thus determined.

If the steering angular speed Vθ is not greater than the stop threshold VS (YES in Step S12), the CPU 31 determines a motor electric current value Im on the basis of the electric current data outputted from the electric current detecting circuit i2 (Step S13). Then, it is judged whether or not the motor electric current value Im thus determined is within a motor stop range ΔI (Step S14). The motor stop range ΔI is a range of the motor electric current value Im where no steering assist is required, and is determined through a motor stop range determining process to be described later. If the motor electric current value Im is within the motor stop range ΔI (YES in Step S14), the CPU 31 judges whether or not the motor electric current value Im is kept within the motor stop range ΔI for a predetermined time period (e.g., 1 to 3 seconds) (Step S15). If this judgment is positive (YES in Step S15), the CPU 31 stops the motor 27 (Step S16) because the steering wheel 2 is considered to be virtually unoperated. Thereafter, the CPU 31 performs the actuation steering angle calculating process to determine the actuation steering angle θt (Step S17). On the other hand, if any of the judgments in Steps S14 and S15 are negated, the CPU 31 performs the process sequence from Step S6 to determine the motor rpm R and drive the motor 27 at the rpm thus determined.

Fig. 3 is a flow chart showing the actuation steering angle calculating process. The CPU 31 determines the absolute steering angle θ at the stop of the motor on the basis of the steering angle data outputted from the steering angle sensor 11 (Step T1). Then, the CPU obtains a vehicle speed V on the basis of the vehicle speed data outputted from the vehicle speed sensor 13, and determines an actuation threshold dθ according to the vehicle speed V (Step T2). The actuation threshold dθ corresponds to a change amount of the steering angle which serves as a trigger for the actuation of the motor 27. That is, the motor 27 is actuated when the change amount of the steering angle reaches the actuation threshold dθ.

More specifically, the actuation threshold dθ is obtained by substituting into the following equation (1R) or (1L) a first constant A and a second constant B for the obtained vehicle speed V. The first constant A and the second constant B are factors for determining a sensitivity for the actuation of the motor 27, and a table indicative of a correlation between the vehicle speed V and the constants A and B is preliminarily stored in the ROM 33. The constant A is the maximum value of the actuation threshold dθ (absolute value thereof), and the constant B corresponds to the number of steering angle values which take the same actuation threshold dθ. Where the steering angle sensor 11 is adapted to output a pulse for every turn by a given steering angle, for example, the steering angle θ may be expressed by the count value of a counter which is counted up or down by the pulse output. In such a case, the constant B may correspond to the number of count values which take the same actuation threshold dθ. It is noted that the constants A and B each have a positive value.

For right-turn steering (positive steering angle θ)

$$d\theta = A - (\theta/B) \quad \ldots (1R)$$

For left-turn steering (negative steering angle θ)

$$d\theta = -A + (\theta/B) \quad \ldots (1L)$$

When the vehicle speed V is zero, i.e., the vehicle stops, the actuation threshold dθ is not determined on the basis of the above equation (1R) or (1L) but set at a predetermined minimum actuation threshold.

The CPU 31 determines a first actuation steering angle θt1 by adding the actuation threshold dθ to the absolute steering angle θ at the motor stop determined in the aforesaid manner (Step T3). Where the motor 27 is off, the first actuation steering angle θt1 is an absolute steering angle at which the motor 27 is to be actuated when the steering wheel 2 is turned in such a direction that the absolute value of the absolute steering angle θ increases.

The CPU 31 determines, in addition to the first actuation steering angle θt1, a second actuation steering angle θt2 which is to be employed when the steering wheel 2 is turned in a direction opposite to the direction in which the absolute value of the absolute steering angle θ increases, i.e., in such a direction that the absolute value of the absolute steering angle θ decreases (Step T4). More specifically, the second actuation steering angle is set at the same value as the maximum actuation threshold A or -A as shown in the following equations (2R) and (2L) :

For right-turn steering (negative steering angle 8)

$$\theta t2 = A \quad \ldots (2R)$$

For left-turn steering (positive steering angle θ)

$$\theta t2 = -A \quad \ldots (2L)$$

The maximum actuation threshold A or -A is equal to the threshold dθ at θ=0, i.e., the threshold with respect to the steering angle midpoint. Therefore, where the steering operation is started from the steering angle midpoint or performed in the direction in which the absolute value of the absolute steering angle θ decreases, the motor 27 is actuated only when the steering operation is performed to get out of a so-called play angle range around the steering angle midpoint.

The CPU 31 stores the first and second actuation steering angles θt1 and θt2 thus determined in the RAM 32 (Step T5).

In Fig. 2, the first and second actuation steering angles θt1 and θt2 are generally designated as the actuation steering angle θt.

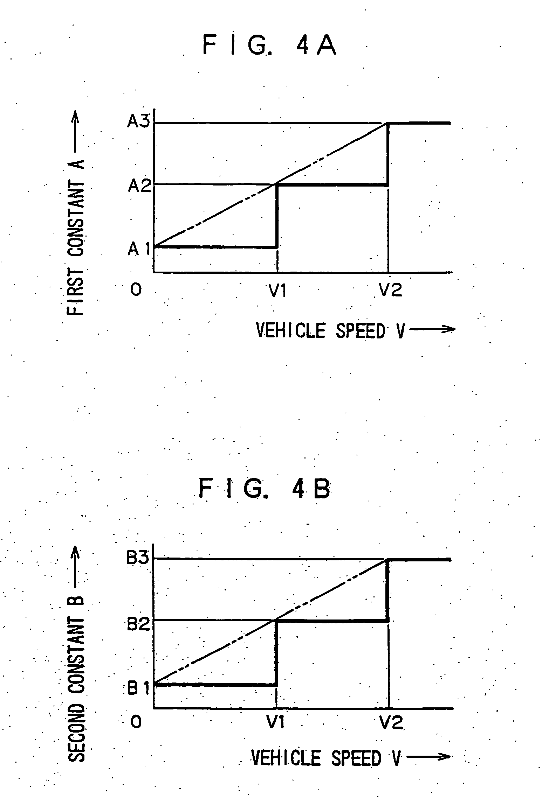

Figs. 4A and 4B are diagrams for explaining the first constant A and the second constant B. The first constant A is determined for each predetermined vehicle speed range, and corresponds to the maximum value of the actuation threshold dθ to be determined for the corresponding vehicle speed range. More specifically, as shown in Fig. 4A, where the vehicle speed V is lower than V1 (e.g., V1=30 (km/h)), the first constant A is set at A1 (e.g., A1=1). Where the vehicle speed is not lower than V1 and lower than V2 (e.g., V2=60 (km/h)), the first constant A is set at A2 (e.g., A2=3). Further, where the vehicle speed V is not lower than V2, the first constant A is set at A3 (e.g., A3=6).

The second constant B is determined for each predetermined vehicle speed range, and corresponds to the number of the absolute steering angle values which take the same actuation threshold dθ for the corresponding vehicle speed range. More specifically, as shown in Fig. 4B, where the vehicle speed V is lower than V1, the second constant B is set at B1 (e.g., B1=1). Where the vehicle speed V is not lower than V1 and lower than V2, the second constant B is set at B2 (e.g., B2=2). Further, where the vehicle speed V is not lower than V2, the second constant B is set at B3 (e.g., B3=3).

The first constant A and the second constant B are not necessarily set in a stepwise form as shown in Figs. 4, but may be set as being linearly variable as indicated by two-dot-and-dash lines, for example, when the vehicle speed V is lower than V2.

The actuation threshold dθ is set greater for a higher vehicle speed by setting the first constant A greater for a higher vehicle speed. Further, the decrease rate of the absolute value of the actuation threshold dθ with an increase in the absolute value of the absolute steering angle θ at the motor stop is reduced by setting the second constant B greater for a higher vehicle speed. Therefore, even if the absolute value of the absolute steering angle 6 at the motor stop is relatively great, a relatively large amount of the change in the steering angle is required for the actuation of the motor 27. Thus, needless motor actuation is prevented when the vehicle speed is high. When the vehicle speed is low, the actuation sensitivity is increased, so that a steering assist force can immediately be generated.

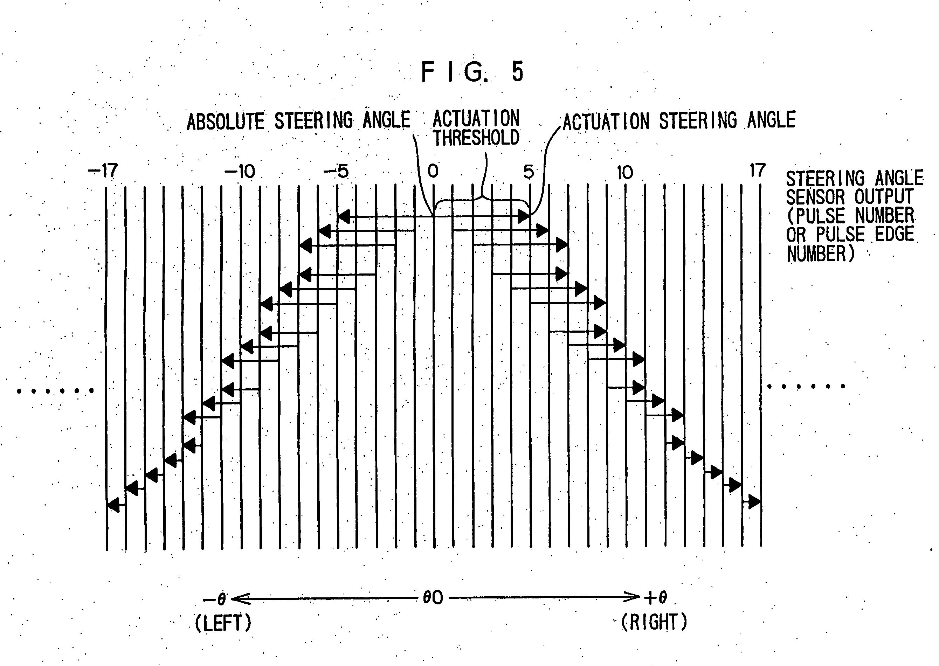

Fig. 5 is a diagram showing a relationship between the absolute steering angle θ and the first actuation steering angle θt1, particularly, a relationship existing between the absolute steering angle 6 and the first actuation steering angle θt1 when the first constant A and the second constant B are "5" and "3"; respectively. In Fig. 5, the absolute steering angle θ at the motor stop is represented by the tail end of an arrow, the actuation threshold dθ is represented by the length of the arrow, and the first actuation steering angle θt1 is represented by the head of the arrow. Further, vertical lines represent absolute steering angles θ.

As apparent from Fig. 5, the actuation threshold dθ decreases as the value of the absolute steering angle θ at the motor stop increases. That is, the sensitivity for the actuation of the motor 27 becomes higher as the value of the absolute steering angle θ at the motor stop becomes greater. This is based on the following ground.

Where the absolute steering angle θ has a value close to the steering angle midpoint θ0, the steering assist is provided only when the steering wheel 2 is operated to get out of the play angle range of the steering wheel 2. Therefore, when the steering angle is close to the steering angle midpoint, excessive steering assist can be suppressed by setting the actuation threshold dθ greater, so that the energy saving can be enhanced. On the contrary, when the absolute steering angle θ has a great value, a satisfactory steering feeling can be ensured by immediately providing the steering assist.

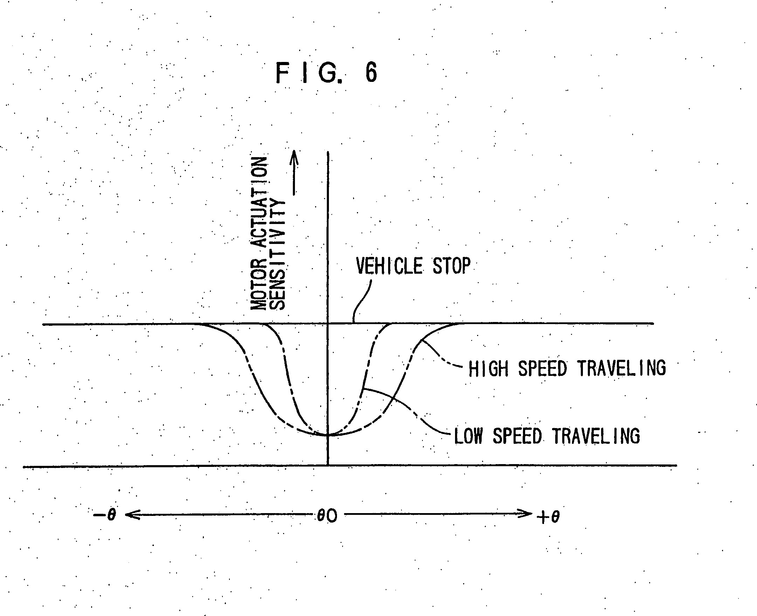

Fig. 6 is a diagram for explaining a relationship between the sensitivity for the actuation of the motor 27 (which becomes higher as the absolute value of the actuation threshold dθ decreases) and the vehicle speed V. As apparent from Fig. 6, the sensitivity for the actuation of the motor. 27 varies depending upon the vehicle speed V, even if the absolute steering angle θ at the motor stop is at the same value. More specifically, the sensitivity for the actuation of the motor 27 is low at high speed traveling, and high at low speed traveling. This is because little steering assist force is required at the high speed traveling and the steering assist should immediately be provided at the low speed traveling.

When the motor vehicle stops with a vehicle speed V of zero, the actuation threshold dθ is set at the predetermined minimum value., so that the sensitivity for the actuation of the motor 27 is kept constant irrespective of the value of the absolute steering angle θ. Where a so-called parking steering operation is performed when the vehicle stops, a greater steering assist force is required and, therefore, it is preferred that the steering assist is immediately provided irrespective of the value of the absolute steering angle θ.

Fig. 7 is a flow chart for explaining the motor stop range ΔI determining process. The CPU 31 constantly monitors the motor electric current value Im (Step U1). On the basis of the motor electric current value Im, the CPU 31 determines a non-load electric current value 10 which corresponds to a motor electric current value observed when the motor 27 is in a non-load state (Step U2). Using the non-load electric current value 10 thus determined, the CPU 31 determines the motor stop range ΔI (Step U3). More specifically, the CPU 31 determines as the motor stop range ΔI a range defined between the non-load electric current value IO thus determined and a value I0+dI resulting from summation of the non-load electric current value IO and an electric current threshold dI which is predetermined in accordance with the specifications of the motor vehicle.

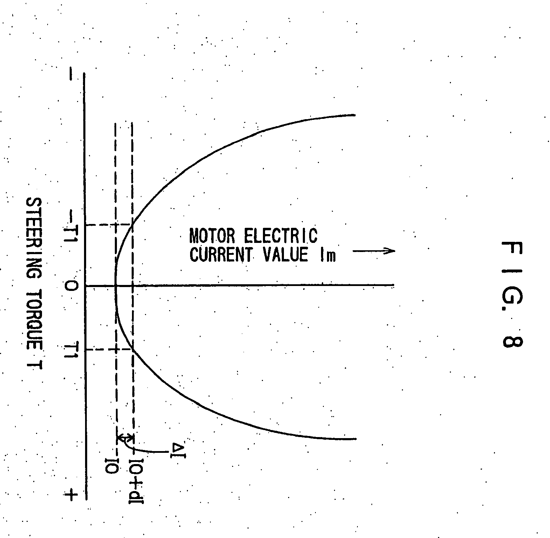

Fig. 8 is a graph showing a relationship between the steering torque T and the motor electric current value Im. The abscissa and the ordinate represent the steering torque T and the motor electric current value Im, respectively. The motor electric current value Im in a range around a steering torque T of zero is expressed by a curve having a local point at T=0. When the steering torque T is zero, the motor 27 is in the non-load state and, therefore, the minimum value of the motor electric current value Im corresponds to the non-load electric current value 10.

On the other hand, a torque range where no steering assist force is required to be applied to the steering wheel 2 is determined by the specifications of the motor vehicle. Provided that the torque range is defined between torque thresholds T1 and -T1 with its midpoint set at zero, a difference between the non-load electric current value 10 and an electric current value for these torque thresholds T1, -T1 is preliminarily determined which is employed as the electric current threshold dI. The range defined between the non-load electric current value IO and the value I0+dI obtained by adding the electric current threshold dI to the non-load electric current value 10 is considered to be the motor stop range ∆I where the steering wheel 2 is not operated. The electric current threshold dI is preliminarily determined for each type of motor vehicles, and stored in the ROM 33.

The non-load electric current value I0 varies mainly depending on the temperature of the working oil. More specifically, when the temperature of the working oil is low, for example, the working oil has a high viscosity, so that the load on the motor 27 is greater than when the temperature of the working oil is high. Therefore, the motor electric current value Im is high when the temperature of the working oil is low. That is, the Im-T curve in Fig. 8 is shifted upward with the non-load electric current value 10 being increased.

In this embodiment, therefore, the non-load electric current value 10 is calculated, and the range between the calculated non-load electric current value 10 and the value I0+dI resulting from the summation of the non-load electric current value 10 and the electric current threshold dI stored in the ROM 33 is defined as the motor stop range ∆I.

The calculation of the non-load electric current value 10 is achieved, for example, by determining the most frequent electric current value out of sampled motor electric current values Im. More specifically, the CPU 31 samples electric current data outputted from the electric current detecting circuit 12 over a predetermined time period (e.g., 10 (min) to 1 (hour)) on condition that the motor rpm R is kept constant. The motor electric current values Im determined on the basis of the electric current data obtained through the sampling have a normal distribution. In this case, a motor electric current value Im

at a steering torque of zero is the most frequent electric current value, which is employed as the non-load electric current value 10.

Otherwise, the minimum electric current value, which is determined out of motor electric current values Im sampled by a predetermined number of times or during a predetermined time period on condition that the motor rpm R is kept constant, may be employed as the non-load electric current value 10.

In accordance with the embodiment described above, it is judged, on the basis of the motor electric current value Im, whether or not the steering assist is required, and the judgment result is employed as one condition for stopping the motor 27, in view of the fact that the motor electric current value Im varies depending upon the steering torque. Therefore, the drive control of the motor 27 can be performed in accordance with the steering torque even without the use of a torque sensor, so that an improved steering feeling can be ensured.

As the absolute value of the absolute steering angle θ at the motor stop increases, the sensitivity for the actuation of the motor 27 with respect to a change in the steering angle is increased. Therefore, needless motor actuation can be suppressed when the steering angle is close to the steering angle midpoint. In addition, when the steering angle θ is large, a steering assist force can immediately be generated. Thus, the energy saving can be enhanced, and catch-up feeling of the steering wheel can be eliminated.

Further, the sensitivity for the actuation of the motor 27 is increased at the low speed traveling which requires a greater steering assist force, while the actuation sensitivity is reduced at the high speed traveling. Hence, the enhancement of the energy saving and the improvement of the steering feeling can both be ensured.

**INDUSTRIAL APPLICABILITY**

As previously described, the power steering apparatus according to the present invention is used for applying a steering assist force to a steering mechanism of a motor vehicle.

The invention also includes a power steering apparatus for generating a steering assist force by a hydraulic pressure generated by a pump driven by an electric motor, comprising: steering angular speed detecting means for detecting a steering angular speed; electric current detecting means for detecting a value of motor current flowing through the electric motor; stop controlling means for stopping the electric motor in response to duration of a predetermined time period during which the steering angular speed detected by the steering angular speed detecting means is kept not greater than a predetermined stop threshold and the motor current value detected by the electric current detecting means is kept within a predetermined motor stop range.

The above power steering apparatus comprises:

non-load electric current value calculating means for determining, on the basis of the motor electric current value detected by the electric current detecting means, a non-load electric current value which corresponds to a motor electric current value observed when the electric motor is in a non-load state; and motor stop range determining means for determining the motor stop range on the basis of the non-load electric current value determined by the non-load electric current value calculating means.

The motor stop range determining means of the above power steering apparatus determines as the motor stop range a range defined between the non-load electric current value and a value obtained by adding a predetermined electric current threshold to the non-load electric current value.

The invention also includes a power steering apparatus for generating a steering assist force by a hydraulic pressure generated by a pump driven by an electric motor, comprising: steering angle detecting means for detecting a steering angle with respect to a steering angle mid point; actuation control means for actuating the electric motor on condition that a change amount of the steering angle detected by the steering angle detecting means exceeds a predetermined actuation threshold in a motor stop state; and actuation threshold determining means for determining the actuation threshold in accordance with a value of the steering angle detected by the steering angle detecting means when the electric motor is stopped.

Preferably the actuation control means of the above power steering apparatus comprises:

actuation steering angle calculation calculating means for determining, on the basis of the value of the steering angle detected by the steering angle detecting means and the actuation threshold determined by the actuation threshold determining means, an actuation steering angle which corresponds to a steering angle at which the electric motor in an off state is to be actuated; and means for actuating the electric motor, when the electric motor is off, on condition that the value of the steering angle detected by the steering angle detecting means reaches the actuation steering angle determined by the actuation steering angle calculating means.

Preferably the actuation threshold determining means of the above power steering apparatus sets the actuation threshold smaller as the value of the steering angle detected by the steering angle detecting means at the motor stop increases.

The above power steering apparatus preferably comprises:

vehicle speed detecting means for detecting a vehicle speed, wherein the actuation threshold determining means sets the actuation threshold greater as the vehicle speed detected by the vehicle speed detecting means increases.

**Claims**

1. A power steering apparatus for generating a steering assist force by a hydraulic pressure generated by a pump (26) driven by an electric motor (27), comprising:

steering angular speed detecting means (11, 30, S11) for detecting a steering angular speed (VΘ);
stop controlling means (30, S12-S16) for stopping the electric motor (27) in response to duration of a predetermined time period during which the steering angular speed (VΘ) detected by the steering angular speed detecting means (11, 30, S11) is kept not greater than a predetermined stop threshold (VS) and another parameter (Im) is kept within a predetermined motor stop range (ΔI);
**characterized by**
electric current detecting means (12) for detecting a value (Im) of motor current flowing through the electric motor (27), the other parameter (Im) being the motor current value (Im) detected by the electric current detecting means (12);
non-load electric current value calculating means (30, U2) for determining, on the basis of the motor electric current value (Im) detected by the electric current detecting means (12), a non-load electric current value (10) which corresponds to a motor electric current value observed when the electric motor (27) is in a non-load state; and
motor stop range determining means (30, U3) for determining the motor stop range (ΔI) on the basis of the non-load electric current value (10) determined by the non-load electric current value calculating means (30, U2),
wherein the motor stop range determining means (30, U3) determines as the motor stop range (ΔI) a range defined between the non-load electric current value (10) and a value (I0+dI) obtained by adding a predetermined electric current threshold (dI) to the non-load electric current value (I0),
wherein the predetermined electric current threshold (dI) is predetermined in accordance with the specifications of a motor vehicle, and is corresponding to a torque range where no steering assist force is required, and is determined for each type of motor vehicles and stored in a storing means (33).

**2.** A power steering apparatus as set forth in claim 1, wherein the non-load electric current value calculating means (30) calculates the non-load electric current value (I0) by determining the most frequent electric current value out of sampled motor electric current value (Im), the non-load electric current value calculating means (30) sampling the motor electric current data outputted from the electric current detecting means (12) over a predetermined time period on condition that the motor rpm (R) is kept constant, the sampled motor electric values (Im) determined on the basis of the electric current data obtained through the sampling having a normal distribution, a motor electric current value (Im) at a steering torque of zero being the most frequent electric current value, which is employed as the non-load electric current value (I0).

**3.** A power steering apparatus as set forth in claim 1, wherein the non-load electric current value calculating means (30) calculating the non-load electric current value (I0) by determining the minimum electric current value, which is determined out of motor electric current values (Im) sampled by a predetermined number of times or during a predetermined time period on condition that the motor rpm (R) is kept constant, the minimum electric current value being employed as the non-load electric current value (I0).

**Patentansprüche**

**1.** Servolenkvorrichtung zum Erzeugen einer Lenkhilfskraft mittels eines hydraulischen Drucks, der durch eine Pumpe (26) erzeugt wird, die durch einen elektrischen Motor (27) angetrieben wird, mit:

Lenkwinkelgeschwindigkeitserfassungsmitteln (11, 30, S11) zum Erfassen einer Lenkwinkelgeschwindigkeit (VΘ);
Anhaltesteuerungsmitteln (30, S12-S16) zum Anhalten des elektrischen Motors (27) als Reaktion auf die Dauer einer vorbestimmten Zeitspanne, in der die Lenkwinkelgeschwindigkeit (VΘ), die durch die Lenkwinkelgeschwindigkeitserfassungsmittel (11, 30, S11) bestimmt wird, nicht größer als ein vorbestimmter Anhalteschwellenwert (VS) ist und ein weiterer Parameter (Im) innerhalb eines vorbestimmten Motoranhaltebereichs (ΔI) ist;
**gekennzeichnet durch**
elektrische Stromerfassungsmittel (12) zum Erfassen eines Wertes (Im) eines Motorstroms, der **durch** den elektrischen Motor (27) fließt, wobei der andere Parameter (Im) der Motorstromwert (Im) ist, der **durch** die elektrischen Stromerfassungsmittel (12) erfasst wird;
lastfreie elektrische Stromwertbestimmungsmittel (30, U2) zum Bestimmen eines lastfreien elektrischen Stromwertes (I0), der einem elektrischen Motorstromwert entspricht, der beobachtet wird, wenn der elektrische Motor (27) in einem lastfreien Zustand ist, und zwar auf der Grundlage des elektrischen Motorstromwertes (Im), der durch die elektrischen Stromerfassungsmittel (12) erfasst wird; und
Motoranhaltebereichsbestimmungsmittel (30, U3) zum Bestimmen des Motoranhaltebereichs (ΔI) auf der Grundlage des lastfreien elektrischen Stromwertes (I0), der bestimmt wird **durch** die lastfreien elektrischen Stromwertbestimmungsmittel (30, U2),
wobei die Motoranhaltebereichsbestimmungsmittel (30, U3) einen Bereich als den Motoranhaltebereich (AI) bestimmen, der definiert ist zwischen dem lastfreien elektrischen Stromwert (I0) und einem Wert (I0+dI), der **durch** Addieren eines vorbestimmten elektrischen Stromschwellenwertes (dI) zu dem lastfreien elektrischen Stromwert (I0) erhalten wird,
wobei der vorbestimmte elektrische Stromschwellenwert (dI) entsprechend den Spezifikationen des Kraftfahrzeugs vorbestimmt ist und einem Momentenbereich entspricht, in dem keine Lenkhilfskraft erforderlich ist, und für jede Art von Kraftfahrzeug bestimmt wird und in Speichermitteln (33) gespeichert wird.

**2.** Servolenkvorrichtung nach Anspruch 1, wobei die lastfreien elektrischen Stromwertberechnungsmittel (30) den lastfreien elektrischen Stromwert (I0) berechnen durch Bestimmen des häufigsten elektrischen Stromwertes aus abgetasteten elektrischen Motorstromwerten (Im), wobei die lastfreien elektrischen Stromwertberechnungsmittel (30) die elektrischen Motorstromdaten abfragen, die von den elektrischen Stromerfassungsmitteln (12) über eine vorbestimmte Zeitdauer ausgegeben werden unter der Bedingung, dass die Motordrehzahl (R) konstant gehalten wird, die abgetasteten elektrischen Motorstromwerte (Im), die bestimmt werden auf der Grundlage der elektrischen Stromdaten, die durch das Abtasten erhalten werden, eine Normalverteilung aufweisen, ein elektrischer Motorstromwert (Im) bei einem Lenkmoment von Null der häufigste elektrische Stromwert ist, der als der lastfreie elektrische Stromwert (10) eingesetzt wird.

**3.** Servolenkvorrichtung nach Anspruch 1, wobei die lastfreien elektrischen Stromwertberechnungsmittel (30) den lastfreien elektrischen Stromwert (I0) berechnen durch Bestimmen des kleinsten elektrischen Stromwertes, der bestimmt wird aus elektrischen Motorstromwerten (Im), die mit einer vorbestimmten Häufigkeit oder während einer vorbestimmten Zeitdauer abgetastet werden, unter der Bedingung, dass die Motordrehzahl (R) konstant gehalten wird, wobei der kleinste elektrische Stromwert als der lastfreie elektrische Stromwert (I0) eingesetzt wird.

## Revendications

**1.** Dispositif de direction assistée destiné à générer une force d'assistance au braquage par une pression hydraulique générée par une pompe (26) entrainée par un moteur électrique (27), comprenant:

un moyen de détection de vitesse angulaire de braquage (11, 30, S11) destinée à détecter une vitesse angulaire de braquage (V);

un moyen de commande d'arrêt (30, S12-S16) destiné à arrêter le moteur électrique (27) en réponse à la durée d'un intervalle de temps prédéterminé pendant lequel la vitesse angulaire de braquage (V) détectée par le moyen de détection de vitesse angulaire de braquage (11, 30, S11) est maintenue à une valeur non supérieure à un seuil d'arrêt prédéterminée (VS) et un autre paramètre (Im) est maintenu dans une gamme d'arrêt de moteur (I) prédéterminé; **caractérisé par**

un moyen de détection de courant électrique (12) destiné à détecter une valeur (Im) du courant de moteur passant à travers le moteur électrique (27), l'autre paramètre (Im) étant la valeur de courant de moteur (Im) détectée par le moyen de détection de courant électrique (12);

un moyen de calcul de valeur de courant électrique sans charge (30, U2) destiné à déterminer, sur la base de la valeur de courant électrique de moteur (Im) détectée par le moyen de détection de courant électrique (12), une valeur de courant électrique sans charge (IO) qui correspond à une valeur de courant électrique de moteur observée lorsque le moteur électrique (27) est dans un état d'absence de charge; et

un moyen de détermination de gamme d'arrêt de moteur (30, U3) destiné à déterminer la gamme d'arrêt de moteur (I) sur la base de la valeur de courant électrique sans charge (IO) déterminée par le moyen de calcul de valeur de courant électrique sans charge (30, U2),

dans lequel le moyen de détermination de gamme d'arrêt de moteur (30, U3) détermine, en tant que gamme (I) d'arrêt du moteur, une gamme définie entre la valeur de courant électrique (I0) sans charge et une valeur (I0+dI) obtenue par addition d'un seuil (dI) de courant électrique prédéterminé à la valeur (I0) du courant électrique sans charge,

dans lequel le seuil de courant électrique prédéterminé (dI) est prédéterminé en fonction des spécifications d'un véhicule à moteur, et correspond à une gamme de couples pour laquelle aucune force d'assistance au braquage n'est nécessaire, et est déterminé pour chaque type de véhicule à moteur et est stocké dans un moyen de stockage (33).

**2.** Dispositif de direction assistée selon la revendication 1, dans lequel le moyen de calcul de la valeur de courant électrique sans charge (30) calcule la valeur de courant électrique sans charge (IO) en déterminant la valeur du courant électrique la plus fréquente à partir de la valeur de courant électrique de moteur échantillonnée (Im), le moyen de calcul de valeur de courant électrique sans charge (30) échantillonnant les données de courant électrique de moteur délivrées par le moyen de détection de courant électrique (12) au cours d'un intervalle de temps prédéterminé à condition que la vitesse de rotation (R) du moteur soit maintenue constante, les valeurs de courant électrique de moteur échantillonnées (Im) déterminées sur la base des données de courant électrique obtenues par l'échantillonnage ayant une distribution normale, une valeur de courant électrique de moteur (Im) à un couple de braquage nul étant la valeur de courant électrique la plus fréquente qui est utilisée en tant que valeur de courant électrique sans charge (I0),

**3.** Dispositif de direction assistée selon la revendication 1, dans lequel le moyen de calcul de valeur de courant électrique sans charge (30) calculant la valeur de courant électrique sans charge (10) en déterminant la valeur de courant électrique minimale qui est déterminée à partir de valeurs de courant électrique de moteur échantillonnées (Im) un nombre prédéterminé de fois ou pendant un intervalle de temps prédéterminé à condition que la vitesse de rotation (R) du moteur soit maintenue constante, la valeur de courant électrique minimale étant utilisée en tant que valeur de courant électrique sans charge (I0).

F I G. 1

F I G. 2

```
                        ┌──────────────┐
                        │   S T A R T  │
                        └──────┬───────┘
                               │
                               ▼
              ┌──────────────────────────────────────┐
        ┌─────│         MOTOR OFF ?          │─── NO ──────────────┐
   S 1  │     └──────────────────────────────────────┘             │
        │              │ YES                                        ▼
   S 2  │      ┌──────────────────────┐          ┌──────────────────────────────┐  S 11
        │      │ DETERMINE ABSOLUTE   │          │ DETERMINE STEERING           │
        │      │ STEERING ANGLE θ     │          │ ANGULAR SPEED Vθ             │
        │      └──────────┬───────────┘          └──────────────┬───────────────┘
        │                 │                                     │
        │                 ▼                          YES        ▼
        │◄── NO ── ⟨  θ ≧ θ t  ⟩ S 3         ┌─────⟨ Vθ ≦ VS ? ⟩ S 12
        │           ?                        │      NO   │
        │                 │ YES              │           ▼                      S 13
   S 4  │      ┌──────────────────────┐      │  ┌──────────────────────────────┐
   S 5  │      │    ACTUATE MOTOR     │      │  │ DETERMINE MOTOR ELECTRIC     │
        │      └──────────┬───────────┘      │  │ CURRENT VALUE Im             │
        │                 │                  │  └──────────────┬───────────────┘
        │      ┌──────────────────────┐      │       NO        ▼               S 14
        │      │ DETERMINE STEERING   │      │◄────── ⟨ Im WITHIN ΔI ? ⟩
        │      │ ANGULAR SPEED Vθ     │      │                 │ YES
        │      └──────────┬───────────┘      │       NO        ▼               S 15
        │                 │                  └────── ⟨ PREDETERMINED TIME PASSED ? ⟩
        │                 ▼            YES                      │ YES
   S 6  │       ⟨ Vθ ≦ VT 1 ? ⟩ ──────────┐          ┌────────────────────┐ S 16
        │                 │                │          │    STOP MOTOR      │
        │                 │ NO             ▼          └─────────┬──────────┘
        │                 │        ┌──────────────┐             │           S 17
        │                 │        │  R = R 1     │   S 7  ┌──────────────────────────────┐
        │                 │        └──────┬───────┘        │ ACTUATION STEERING ANGLE     │
        │                 ▼               │                │ CALCULATING PROCESS          │
   S 8  │       ⟨ Vθ < VT 2 ? ⟩ ──YES──┐  │                └───────────────┬──────────────┘
        │                 │             │  │                                │
        │                 │ NO          ▼  │                                │
        │        ┌──────────────┐  ┌────────────────┐ S 9                   │
   S 10 │        │  R = R 2     │  │ DETERMINE R    │                        │
        │        └──────┬───────┘  │ ACCORDING TO Vθ│                        │
        │               │          └───────┬────────┘                       │
        │               ▼                  ▼                                 ▼
        └───────────────┴──────────────────┴─────────────────────────────────
```

# F I G. 3

```
        ┌─────────────────────────────────┐
        ║  ACTUATION STEERING ANGLE       ║
        ║    CALCULATING PROCESS          ║
        └─────────────────────────────────┘
                        │
   T 1   ┌─────────────────────────────────┐
         │   DETERMINE ABSOLUTE STEERING    │
         │     ANGLE  θ  AT MOTOR STOP      │
         └─────────────────────────────────┘
                        │
   T 2   ┌─────────────────────────────────┐
         │   DETERMINE CHANGE AMOUNT dθ     │
         │       OF STEERING ANGLE          │
         └─────────────────────────────────┘
                        │
   T 3   ┌─────────────────────────────────┐
         │     DETERMINE FIRST ACTUATION    │
         │      STEERING ANGLE  θt1         │
         └─────────────────────────────────┘
                        │
   T 4   ┌─────────────────────────────────┐
         │    DETERMINE SECOND ACTUATION    │
         │      STEERING ANGLE  θt2         │
         └─────────────────────────────────┘
                        │
   T 5   ┌─────────────────────────────────┐
         │  RETAIN  θt1  AND  θt2  IN RAM   │
         └─────────────────────────────────┘
                        │
                 ┌───────────────┐
                 │   R E T U R N  │
                 └───────────────┘
```

FIG. 4A

FIG. 4B

# F I G. 5

ABSOLUTE STEERING ANGLE   ACTUATION
                          THRESHOLD          ACTUATION STEERING ANGLE

−17          −10          −5          0          5          10          17    STEERING ANGLE
                                                                              SENSOR OUTPUT
                                                                              (PULSE NUMBER
                                                                              OR PULSE EDGE
                                                                              NUMBER)

−θ ⟵ ————————— θ0 ————————— ⟶ +θ
(LEFT)                                    (RIGHT)

F I G. 6

# F I G. 7

```
                    ┌─────────────┐
                    │   S T A R T │
                    └──────┬──────┘
                           │
      ┌────────────────────▼──────────────┐
      │  ┌──────────────────────────────┐ │
      │  │ DETERMINE MOTOR ELECTRIC     │ │  U 1
      │  │      CURRENT VALUE Im        │ │
      │  └──────────────────────────────┘ │
      │  ┌──────────────────────────────┐ │
      │  │     DETERMINE NON-LOAD       │ │  U 2
      │  │  ELECTRIC CURRENT VALUE  IO  │ │
      │  └──────────────────────────────┘ │
      │  ┌──────────────────────────────┐ │
      │  │     DETERMINE MOTOR STOP     │ │  U 3
      │  │         RANGE  Δ I           │ │
      │  └──────────────────────────────┘ │
      └───────────────────────────────────┘
```

# F I G. 8

**EP 1 900 604 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0044733 A1
- JP 09058495 A
- JP 59118577 A